# EUROPÄISCHE PATENTANMELDUNG

(11) **EP 1 241 095 A1**
(43) Veröffentlichungstag der Anmeldung: **18.09.2002**
(21) Anmeldenummer: 01127892.6
(22) Anmeldetag: 23.11.2001
(51) Int. Cl.: B65B 5/10, B65B 35/46, B65G 47/82

(54) **Vorrichtung zum Beschicken einer Verpackungsaufnahme**

(30) Priorität: 17.03.2001 DE 10113080
(71) Anmelder: Rovema Verpackungsmaschinen GmbH, 35463 Fernwald (DE)
(72) Erfinder: Hoffmann, Matthias, 35423 Lich (DE); Baur, Walter, Dr., 63584 Gründau (DE)

(57) **Zusammenfassung**

Es wird eine Vorrichtung (1) zum Beschicken einer Verpackungsaufnahme (5) vorgeschlagen, mit einer um eine Achse (8) schwenkbaren bzw. drehbaren Kurbel (3), wobei die Kurbel (3) mittels eines ersten Motors (4) um die Achse (8) verschwenkt bzw. gedreht wird, wobei am äußeren Ende der Kurbel (3) eine zweite Achse (6) vorgesehen ist, mit welcher die Verpackungsaufnahme (5) schwenkbar bzw. drehbar verbunden ist, ein zweiter Motor (7) dazu vorgesehen ist, die Verpackungsaufnahme (5) um die Kurbel (3) zu schwenken bzw. zu drehen, und die beiden Motoren (4, 7) separat angesteuert werden. Eine derartige Vorrichtung (1) kann wahlweise von einer Seite oder von oben beschickt werden.

## Beschreibung

Die vorgeschlagene Neuerung betrifft eine Vorrichtung zum Beschicken einer Verpackungsaufnahme. Eine Verpackungsaufnahme dient der Aufnahme mehrerer Verpackungen, welche übereinander oder nebeneinander in die Verpackungsaufnahme gebracht werden, um dort einen Stapel zu bilden. Dieser Stapel wird dann einer Umverpackung, z. B. einem Karton, zugeführt. Werden mehrere Stapel in einen Karton gesetzt, so werden derart im Karton mehrere Stapelreihen oder Gebinde angeordnet, um den Karton möglichst kompakt zu befüllen.

Bei einer bekannten Vorrichtung wird ein als Verpackungsaufnahme dienender Schacht mittels eines Förderbandes von oben mit Beuteln befüllt. Ist der Schacht voll, also vollständig mit aufeinander liegenden Beuteln beschickt, so wird er um 90 Grad in die Horizontale verschwenkt. Danach wird der Stapel hochkant stehender Beutel aus dem Schacht entnommen und in einen Karton gebracht.

Diese bekannte Vorrichtung hat den Nachteil, dass sie nur von oben mit aufeinandergelegten Verpackungen beschickt werden kann. Dies ist zwar ausreichend, um einen Stapel zu erzeugen, nicht aber für eine direkte Befüllung eines Kartons mit nebeneinander stehenden Beuteln. Bei einer beabsichtigten Kartonbefüllung mit im Karton nebeneinander hochkant stehenden Beuteln ist es notwendig, den Karton mit seiner Öffnung zur Seite auszurichten und die Beutel aufeinanderzuschichten, so dass die Beutel nebeneinander stehen, wenn der Karton auf seinen Boden gestellt wird.

Der Erfindung liegt die Aufgabe zu Grunde, eine Vorrichtung zum Beschicken einer Verpackungsaufnahme derart zu schaffen, dass die Verpackungsaufnahme für eine Befüllung von oben und von der Seite geeignet ist.

Gelöst ist die Aufgabe gemäß Anspruch 1. Bei dieser Vorrichtung ist eine um eine Achse schwenkbare bzw. drehbare Kurbel vorgesehen, wobei die Kurbel mittels eines ersten Motors um die Achse verschwenkt bzw. gedreht wird, wobei am äußeren Ende der Kurbel eine zweite Achse vorgesehen ist, mit welcher die Verpackungsaufnahme schwenkbar bzw. drehbar verbunden ist, ein zweiter Motor dazu vorgesehen ist, die Verpackungsaufnahme um die Kurbel zu schwenken bzw. zu drehen, und die beiden Motoren separat angesteuert werden.

Die vorgeschlagene Vorrichtung dient zum einen der Bereitstellung der Verpackungsaufnahme, in welche eine Schachtel, ein Karton oder eine Kassette eingesetzt ist, so dass diese wahlweise seitlich oder von oben mit Verpackungen beschickt werden kann. Die Verpackungsaufnahme ist an der Kurbel befestigt, so dass sie sich auf einer Kreisbahn um eine horizontal ausgerichtete Achse derart bewegen kann, dass die Verpackungsaufnahme in horizontaler Ausrichtung (Befüllöffnung oben) die Gebinde abgeben kann, und in einer Befüllstation, in der die Verpackungsaufnahme mit Verpackungen bestückt wird, wahlweise mit der Befüllöffnung seitlich oder oben bereitgestellt werden kann. Zum anderen kann die Verpackungsaufnahme direkt befüllt werden, entweder seitlich oder von oben. Während der erste Motor dazu dient, die Kurbel zu drehen, wird mittels des zweiten Motors die Verpackungsaufnahme relativ zu Kurbel verschwenkt, um an einem bestimmten Ort eine bestimmte Ausrichtung zu erhalten. Dies ist durch die separate Ansteuerung der Motoren erreicht.

Weitere vorteilhafte Ausgestaltungen der Erfindung sind in den Ansprüchen 2 bis 6 beschrieben.

Ist die Vorrichtung als Transporteinrichtung an einer Befüllposition vorgesehen, wobei an der Befüllposition die Verpackungsaufnahme befüllt wird, die Verpackungsaufnahme dann hin zu einer Kurbelposition geschwenkt wird, in welcher die Verpackungsaufnahme geleert wird (Anspruch 2), so dient die Vorrichtung auch einem Weitertransport der erzeugten Stapel.

Ein Transportsystem zum Zuführen der Verpackungen zur Befüllposition (Anspruch 2), z. B. in Form eines Förderbandes oder eine Rutsche, dient einem Heranbringen befüllter Beutel, z. B. von einer Schlauchbeutelmaschine zu der Befüllposition. Eine Transporteinrichtung zum Abtransportieren der Verpackungen von der zur Stapelabgabe geeigneten Kurbelposition weg (Anspruch 4) dient in der Regel einem Transport eines Stapels in einer Umverpackung weg von der Vorrichtung, z. B. hin zu einer Palette.

Verdreht der zweite Motor über ein Zugmittel die Verpackungsaufnahme relativ zur Kurbel (Anspruch 5) so kann der Motor außerhalb des Schwenkbereichs der Kurbel angeordnet werden und ist auch nach Austausch einer kleineren Verpackungsaufnahme gegen eine größer dimensionierte Verpackungsaufnahme nicht hinderlich im Schwenk-bereich der Kurbel angeordnet.

Die Verpackungsleistung der vorgeschlagenen Neuerung wird verdoppelt, wenn analog Anspruch 6 zwei erfindungsgemäße Vorrichtungen nebeneinander angeordnet sind, wobei ihre Achsen auf einer Geraden liegen und sich diese beiden Vorrichtungen abwechselnd mit ihrer Verpackungsaufnahme in der Befüllposition und in der Kurbelposition befinden. Während also die eine Vorrichtung beschickt wird, wird die andere Vorrichtung geleert, und umgekehrt.

Im folgenden wird die Erfindung an Hand von Ausführungsbeispiele darstellenden Figuren näher beschrieben. Es zeigt:
- Figur 1: in einer Seitenansicht eine Vorrichtung zum Beschicken einer Verpackungsaufnahme, wobei die Vorrichtung eine um eine Kreisbahn drehbare Kurbel aufweist, welche von einem ersten Motor drehbar angetrieben wird, welcher auf der Drehachse der Kurbel angeordnet ist, und wobei ein zweiter Motor dazu vorgesehen ist, die Verpackungsaufnahme relativ zur Kurbel zu verschwenken (gestrichelt dargestellt);
- Figur 2: in einer Ansicht von oben den Gegenstand der Figur 1;
- Figur 3: in einer Seitenansicht zwei hintereinander angeordnete, abwechselnd zu beschickende Vorrichtungen gemäß Figur 1, wobei von einem Förderband angelieferte Beutel seitlich in die Verpackungsaufnahmen eingebracht werden;
- Figur 4: in einer Ansicht von oben den Gegenstand der Figur 3;
- Figur 5: in einer Seitenansicht zwei Vorrichtungen analog Figur 3, jedoch mit einem Handhabungsgerät zum Einsetzen der Beutel von oben in einen in der Verpackungsaufnahme befindlichen Karton.

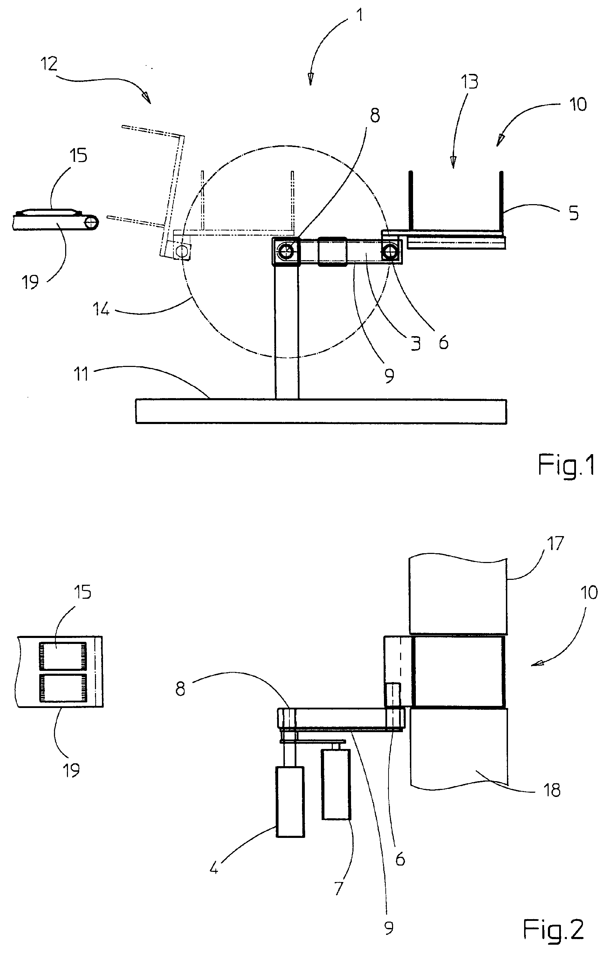

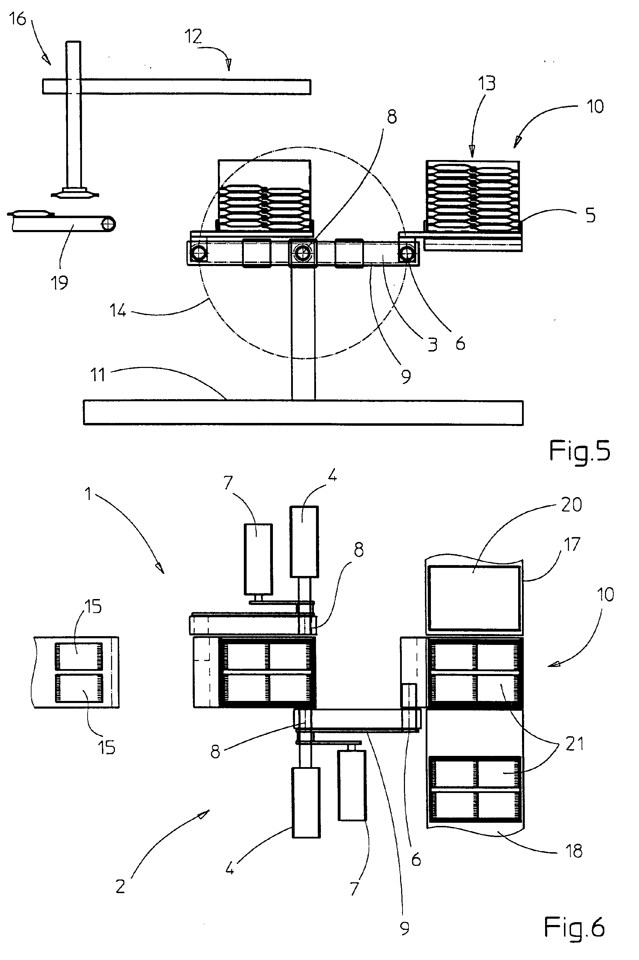

Eine Vorrichtung 1 besteht aus einer Kurbel 3, die, von einem Motor 4 angetrieben, an ihrem Ende um eine Achse 6 drehbar gelagert, eine Verpackungsaufnahme 5 aufweist. Die Drehung dieser Aufnahme 5 um die Achse 6 erfolgt unabhängig von der Drehung der Kurbel 3 durch einen eigenen Motor 7. Diese Unabhängigkeit der Bewegungen wird erzeugt durch die Übertragung der Antriebsbewegung mittels einer Getriebeübersetzung von 1:1 von der Achse 8 auf die an der Kurbel 3 befindlichen Achsen 6. In dem gezeigten Ausführungsbeispiel der Figuren 1 und 2 ist dieses durch ein Zugmittel 9 erreicht. In der Kurbelposition 10, in der die Verpackungsaufnahme 5 ein Gebinde abgibt, bzw. einen befüllten Karton abgibt und einen leeren Karton aufnimmt, ist die Verpackungsaufnahme 5 mit der Befüllöffnung 13 nach oben ausgerichtet. Durch eine Drehung der Kurbel 3 wird die Aufnahme 5 in die Befüllposition 12 gebracht. Führt der Motor 7 währenddessen keine Bewegung aus, so behält die Verpackungsaufnahme 5 die Orientierung zum Gestell bei (Figur 5 und Figur 6), d. h. die Befüllöffnung 13 bleibt oben, die Verpackungsaufnahme 5 wird parallel zu einer Geraden im Gestell 11 auf einer Kreisbahn 14 bewegt. In der Befüllposition 12 kann die Verpackungsaufnahme 5 nun oben mit den Verpackungen 15 befüllt werden, die mit einem Transportsystem 19 zugeführt werden. Die Befüllung von oben kann z. B. mit Hilfe eines Handhabungsgerätes 16 erfolgen. Wird die Kurbel 13 nun weiter bewegt, so bewegt sich die Aufnahme 5 wieder in die Kurbelposition 10 zum Abführen des Gebindes 22 bzw. zum Abführen des befüllten Kartons 21 mittels der Transporteinrichtung 18 und Aufnehmen eines leeren Kartons 20 mittels der Transporteinrichtung 17.

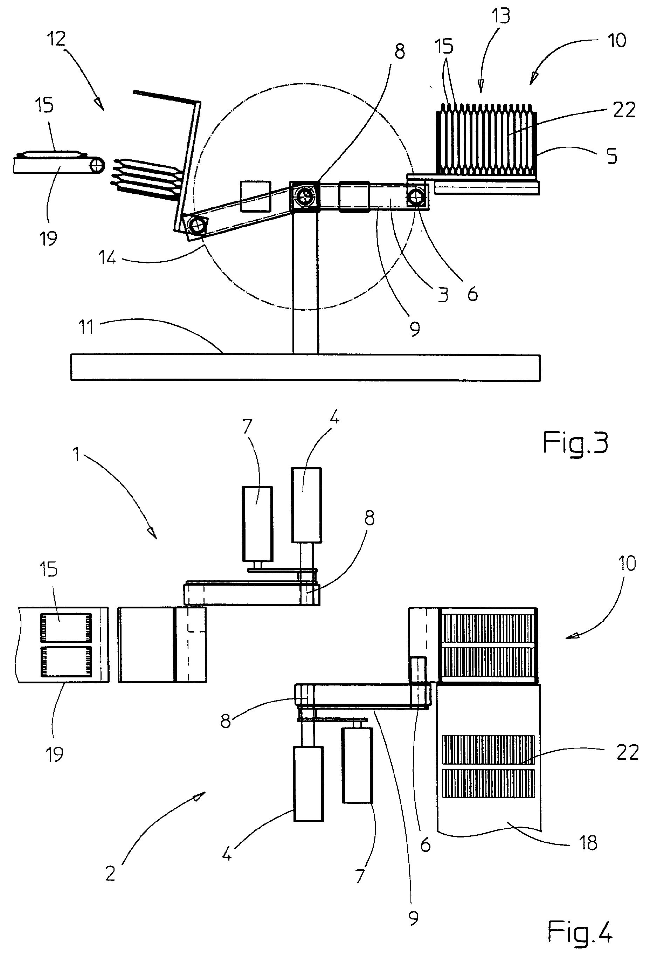

Soll die Aufnahme 5 in der Befüllposition 12 seitlich mit den Verpackungen 15 befüllt werden (Figur 3 und Figur 4), so führt der Motor 7 während des Transports der Verpackungsaufnahme 5 von der Kurbelposition 10 zur Befüllposition 12 eine Bewegung aus, so dass die Verpackungsausnahme 5 relativ zum Gestell geschwenkt wird. Hierdurch kann die Verpackungsaufnahme 5 seitlich mit den Verpackungen 15 befüllt werden. Die seitliche Befüllung kann direkt, wie in Figur 3 gezeigt, erfolgen, d. h. die Verpackungen 15 laufen direkt in die Verpackungsaufnahme 5, oder sie können z. B. mit einem Handhabungsgerät 16 in die Verpackungsaufnahme 5 gesetzt werden. Auf dem weiteren Weg von der Befüllposition 12 zur Kurbelposition 10 führt der Motor 7 nun eine Bewegung aus, so dass die Verpackungsaufnahme 5 wieder in die ursprüngliche Orientierung geschwenkt wird, d. h. mit ihrer Öffnung nach oben.

Vorteilhafterweise wird die Vorrichtung doppelt (Vorrichtung 1 und Vorrichtung 2) ausgeführt, so dass eine Verpackungsaufnahme 5 einer Vorrichtung 1 in Befüllposition 12 mit Verpackungen 15 befüllt werden kann und gleichzeitig die Verpackungsaufnahme 5 der anderen Vorrichtung 2 in Position 10 das Gebinde 22 abführen kann, bzw. den befüllten Karton 21 abführen und einen neuen Karton 20 aufnehmen kann (Figur 3, Figur 4).

Der große Vorteil dieser Vorrichtung 1 ist die hohe Flexibilität bezüglich der Orientierung der Befüllung der Verpackungen 15 in die Verpackungsaufnahme 5 - sie können wahlweise von oben oder seitlich eingebracht werden - bei gleichzeitig sehr einfachem Aufbau der Vorrichtung 1, 2. Beispielsweise ist es möglich, ausschließlich liegend ankommende Verpackungen 15 sowohl stehend als auch liegend in die Verpackungsaufnahme 5 einzubringen, da die Verpackungen 15 zwar liegend in die Verpackungsaufnahme 5 eingebracht werden, durch das Schwenken der Verpackungsaufnahme 5 jedoch in eine stehende Orientierung gebracht werden können.

Der Einsatz zweier Vorrichtungen 1, 2 dieser Art in einer Verpackungslinie ermöglicht eine hohe Leistung beim Einbringen der Verpackungen 15, da Wartezeiten hierdurch stark reduziert werden.

Für das Schwenken der Verpackungsaufnahme 5 um die Achse 6 kann sowohl ein motorischer Antrieb, als auch ein Pneumatikzylinder eingesetzt werden, so dass in letzterem Fall eine noch kostengünstigere Ausführungsform möglich ist. All dies ist unter dem Begriff "Motor" zu verstehen.

Der Einsatz eines Handhabungsgerätes 16 für das Befüllen der Verpackungsaufnahme 5 ermöglicht zusätzlich das Nutzen der Flexibilität dieser Systeme.

Je nach Anwendungsfall ist es möglich, die Verpackungen 15 in eine Kassette zu befüllen, um sie als Gebinde 22 weiterverarbeiten zu können, z. B. um sie einer Wrap-Around-Verpackungsmaschine bereitzustellen (Figur 3 und Figur 4). Wahlweise können die Verpackungen 15 auch direkt in einen Karton 20 oder in ein sonstiges Behältnis eingebracht werden (Figur 5 und Figur 6). Trotz dieser vielfältigen Einsatzmöglichkeiten unterscheiden sich die Ausführungsformen kaum, sie können sogar beliebig miteinander kombiniert werden, oder alle in einem System realisiert sein.

## Patentansprüche

1. Vorrichtung zum Beschicken einer Verpackungsaufnahme (5), mit einer um eine Achse (8) schwenkbaren bzw. drehbaren Kurbel (3), wobei die Kurbel (3) mittels eines ersten Motors (4) um die Achse (8) verschwenkt bzw. gedreht wird, wobei am äußeren Ende der Kurbel (3) eine zweite Achse (6) vorgesehen ist, mit welcher die Verpackungsaufnahme (5) schwenkbar bzw. drehbar verbunden ist, ein zweiter Motor (7) dazu vorgesehen ist, die Verpackungsaufnahme (5) um die Kurbel (3) zu schwenken bzw. zu drehen, und die beiden Motoren (4, 7) separat angesteuert werden.

2. Vorrichtung nach Anspruch 1, **dadurch gekennzeichnet, dass** die Vorrichtung (1) als Transporteinrichtung von einer Befüllposition (12), an welcher die Verpackungsaufnahme (5) befüllt wird, hin zu einer Kurbelposition (10), bei welcher die Verpackungsaufnahme (5) geleert wird, vorgesehen ist.

3. Vorrichtung nach Anspruch 2, **dadurch gekennzeichnet, dass** ein Transportsystem (19) zum Zuführen von Verpackungen (15) an die Befüllposition (12) vorgesehen ist.

4. Vorrichtung nach Anspruch 2 oder Anspruch 3, **dadurch gekennzeichnet, dass** eine Transporteinrichtung (18) zum Abtransportieren der Verpackungen (15) von der Kurbelposition (10) weg vorgesehen ist.

5. Vorrichtung nach Anspruch 1 oder Anspruch 2, **dadurch gekennzeichnet, dass** der zweite Motor (7) über ein Zugmittel (9) die Verpackungsaufnahme (5) relativ zur Kurbel (3) verdreht.

6. Vorrichtung nach Anspruch 2, **dadurch gekennzeichnet, dass** zwei Vorrichtungen (1, 2) nebeneinander vorgesehen sind, deren Achsen (8) identisch liegen, und dass sich die Vorrichtungen (1, 2) mit ihrer Verpackungsaufnahme (5) abwechselnd in der Befüllposition (12) und in der Kurbelposition (10) befinden.
